**Europäisches Patentamt**

**European Patent Office**

**Office européen des brevets**

(19)

(11) Veröffentlichungsnummer: **0 123 894**

**B1**

(12)

# EUROPÄISCHE PATENTSCHRIFT

(45) Veröffentlichungstag der Patentschrift:
20.05.87

(51) Int. Cl.⁴: **G 01 B 21/00**

(21) Anmeldenummer: **84103335.0**

(22) Anmeldetag: **27.03.84**

(54) **Längen- oder Winkelmesseinrichtung.**

(30) Priorität: **27.04.83 DE 3315214**

(43) Veröffentlichungstag der Anmeldung:
**07.11.84 Patentblatt 84/45**

(45) Bekanntmachung des Hinweises auf die Patenterteilung:
**20.05.87 Patentblatt 87/21**

(84) Benannte Vertragsstaaten:
**AT CH DE FR GB IT LI NL SE**

(56) Entgegenhaltungen:
**CH-A-342 001**
**DE-C-2 712 421**

(73) Patentinhaber: **Dr. Johannes Heidenhain GmbH,
Nansenstrasse 17, D-8225 Traunreut (DE)**

(72) Erfinder: **Burkhardt, Horst, Dr., Fraueneichweg 12,
D-8221 Truchtlaching (DE)**

EP 0 123 894 B1

**Beschreibung**

Die Erfindung bezieht sich auf eine Längen- oder Winkelmeßeinrichtung nach dem Oberbegriff des Anspruches 1.

Aus der DE-PS 27 12 421 ist eine Längenmeßeinrichtung bekannt, bei der ein Maßband in einer nutartigen Ausnehmung im Maßstabträgerkörper eingeschoben und endseitig fixiert ist.

Derartige Lösungen werfen probleme auf, da einerseits wegen der geforderten Meßgenauigkeit die maßlichen Toleranzen der Nut und des Maßbandes eng aufeinander abgestimmt sein sollen, jedoch andererseits die Maßtoleranzen aus fertigungstechnischen Gründen möglichst großzügig festgelegt werden sollen. Da die enge Maßtoleranz jedoch Vorrang hat - wegen der höheren erzielbaren Meßgenauigkeit der Meßeinrichtung - kommt es zu Reibungsproblemen, wenn das Maßband in die Nut des Maßstabträgerkörpers eingeschoben wird, und im späteren Meßbetrieb, wenn sich aufgrund von Temperaturschwankungen der Maßstab und der Maßstabträgerkörper in unterschiedlicher Weise ausdehnen. Zwischen dem Maßband und dem Maßstabträgerkörper sollte aus meßtechnischen Gründen möglichst keine Reibung auftreten, die unter Umständen Meßfehler zur Folge hätte. Allein durch das Eigengewicht des Maßbandes kann es bei Relativbewegungen der Bauteile zu reibungsbedingten Meßfehlern kommen.

Zwar ist es bekannt, daß sich die Reibung zwischen zwei Teilen verringert wenn sie vibrieren, jedoch sollten Vibrationen bei Längen- oder Winkelmeßeinrichtungen die eine körperliche Meßteilung aufweisen gemäß dem einschlägigen Stand der Technik unbedingt vermieden werden. Man befürchtete Meßungenauigkeiten wie die Abhandlungen in der DE-A- 20 16 253 und der DE-A- 23 49 944 belegen.

Allerdings sind zur Längenmessung auch bereits Meßeinrichtungen bekannt, die Schwingungen gezielt ausnutzen. In der CH-A- 342001 ist beispielsweise eine Ultraschallmeßeinrichtung beschrieben, bei der durch die Frequenz einer stehenden Welle in einem Medium die Teilungsintervalle bestimmt werden. Die Meßteilung wird also durch die Ultraschallwelle gebildet, die Schwingungen sind das Bezugsnormal. Damit unterliegen derartige Meßeinrichtungen anderen Funktionsprizipien als Meßeinrichtungen mit einer körperlichen Meßteilung, so daß auch ein anderer Grundaufbau erforderlich ist.

Der Erfindung liegt die Aufgabe zugrunde, die Nachteile der eingangs genannten Meßeinrichtung zu vermeiden und eine Meßeinrichtung mit einem Maßstab zu schaffen, der eine Meßteilung aufweist und bei der trotz enger maßlicher Abstimmung der zusammengehörigen Bauteile die schädlichen Reibungsauswirkungen praktisch eliminiert sind.

Diese Aufgabe wird bei einer Vorrichtung der eingangs genannten ist durch die kennzeichnenden Merkmale des Anspruches 1 gelöst.

Die besonderen Vorteile der Erfindung liegen darin, daß durch die schwingenden Bauteile trotz der engen Maßtoleranzen die Längsverschieblichkeit der Bauteile nicht leidet. Störende Reibungskräfte, die zu Meßfehlern hervorrufenden Verspannungen des Maßstabes führen könnten, werden ausgeschaltet.

In vorteilhafter Weise wird die Erfindung durch die in den abhängigen Ansprüchen angegebenen Maßnahmen ausgeschaltet.

Anhand der Zeichnungen wird mit Hilfe eines Ausführungsbeispieles die Erfindung noch näher erläutert.

Es zeigt

Figur 1 die schematisierte Ansicht einer Längenmeßeinrichtung und

Figur 2 eine Schnittdarstellung der Meßeinrichtung entlang der Linie 11/11 in Figur 1 in vergrößertem Maßstab.

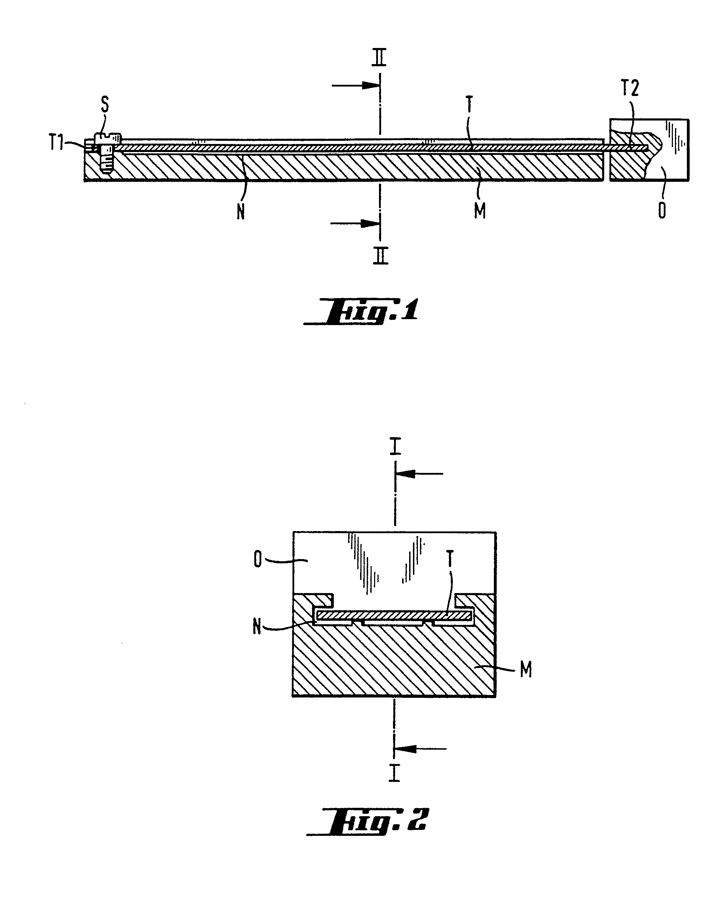

In Figur 1 wird schematisch eine Meßeinrichtung dargestellt, die einen Maßstabträgerkörper M mit einer in Längsrichtung verlaufenden Nut N aufweist. In diese Nut N ist ein Maßstab T in Form eines flexiblen Bandes eingeschoben, daß an seiner Oberseite eine Meßteilung trägt. An einem Ende T1 ist das Maßband T mittels einer Schraube S an dem Maßstabträgerkörper M fixiert. Selbstverständlich kann die Fixierung auch durch Verstiften, Schweißen, Kleben oder dgl. erfolgen. Auch an anderer Stelle längs des Trägerkörpers - beispielsweise in dessen Mitte ist eine Fixierung möglich.

Im vorliegenden Beispiel endet das Maßband T mit seinem freien Ende T2 in einem Schwingungserzeuger O, der es in hochfrequente Schwingungen mit kleiner Amplitude versetzt. In der Nut N, die maßlich auf das Maßband T abgestimmt ist, reduziert sich die Reibung zwischen Nut N und Maßband T ganz erheblich aufgrund der Schwingungen, zu denen das Maßband T durch den Schwingungserzeuger O angeregt wird. Dabei ist die Amplitude der Schwingungen so gering, daß die Abtastung des Maßbandes T durch einen nicht dargestellten Abtastkopf nicht beeinträchtigt wird.

Durch das schwingende Maßband T reduziert sich die Reibung zwischen dem Maßband T und der Nut N derart, daß es nicht zu Spannungen im Maßband T kommen kann, wenn sich aus Gründen, wie beispielsweise Temperaturschwankungen, das Maßband T relativ zum Maßstabträgerkörper M verschiebt. Die Meßgenauigkeit und die Wiederholgenauigkeit der Messungen steigt dadurch ganz erheblich an.

Ob der Schwingungserzeuger O als magnetostriktiver, piezoelektrischer, magnetischer, akustischer oder ähnlich arbeitender Oszillator O ausgestaltet wird, richtet sich nach dem Anwendungsfall.

Es liegt ferner im Rahmen der Erfindung, daß der Maßstabträgerkörper M durch den Oszillator O zu Schwingungen angeregt wird. Besonders bei der Montage der Meßeinrichtungen ist diese Lösung sehr vorteilhaft. Der Maßstabträgerkörper M ist dabei in einer nicht dargestellten Montagevorrichtung verankert, in der der Oszillator O angebracht ist. Trotz der engen Fertigungstoleranzen läßt sich das Maßband T leicht in die Nut N einschieben, da der Maßstabträgerkörper M hochfrequent, aber mit sehr kleiner Amplitude schwingt. Reibung tritt beim Einschieben des Maßbandes T in die Nut N des Maßstabträgerkörpers M praktisch nicht auf, so daß sich die Montage vereinfacht und die Montagezeit verkürzt.

Anstelle des flexiblen Maßbandes T kann selbstverständlich auch ein biegesteifer Maßstab T vorgesehen sein. Es ist bei der Realisierung der Erfindung lediglich darauf zu achten, daß durch die Schwingungen die Abtastung des Maßstabes T nicht beeinträchtigt wird.

Ein weiterer vorteilhafter Aspekt bei der Erfindung ist es, daß ein derart zu Schwingungen angeregter Maßstab T praktisch kaum verschmutzen kann, was sich insbesondere bei Anwendung des lichtelektrischen Abtastprinzipes günstig auswirkt.

## Patentansprüche

1. Längen- oder Winkelmeßeinrichtung mit einem Maßstabträgerkörper, einem mit dem Maßstabträgerkörper verbundenen, in Längserstreckung geringfügig verschiebbaren Maßstab, der eine Meßteilung aufweist, dadurch gekennzeichnet, daß zur Reibungsverminderung wenigstens ein Schwingungserzeuger (O) vorgesehen ist, der mit dem Maßstab (T) und/oder dem Maßstabträgerkörper (M) verbunden und während des Meßbetriebes wirksam ist.

2. Längen- oder Winkelmeßeinrichtung nach Anspruch dadurch gekennzeichnet, daß der Maßstabträgerkörper (M) ein Hohlprofil ist, das über eine Nut (N) in Längsrichtung verfügt, in der der bandförmig ausgebildete Maßstab (T) lose eingeschoben und an einem Ende (T1) fixiert ist, und daß am zweiten Ende (T2) des Maßstabes (T) der Schwingungserzeuger (O) angreift.

3. Längen- oder Winkelmeßeinrichtung nach den Ansprüchen 1 und 2, dadurch gekennzeichnet, daß der Schwingungserzeuger (O) nach Art eines magnetostriktiv, piezoelektrisch, magnetisch, akustisch oder ähnlich arbeitenden Oszillators ausgeführt ist.

## Claims

1. Length-measuring or angle-measuring device having a scale carrier body and a scale, which is connected to the scale carrier body and which is slightly displaceable longitudinally and which exhibits a measurement graduation, characterized in that, in order to reduce friction, at least one oscillator (O) is provided, which is connected to the scale (T) and/or to the scale carrier body (M) and is effective during the measurement operation.

2. Length-measuring or angle-measuring device according to Claim 1, characterized in that the scale carrier body (M) is a hollow section, which has a groove (N) which extends in the longitudinal direction and in which the scale (T), which is constructed in the form of a band, is loosely inserted and is fixed at one end (T1), and in that the oscillator (O) engages at the second end (T2) of the scale (T).

3. Length-measuring or angle-measuring device according to Claims 1 and 2, characterized in that the oscillator (O) is constructed in the manner of a magnetostrictively, piezoelectrically, magnetically, acoustically or similarly operating oscillator.

## Revendications

1. Dispositif de mesure de longueurs ou d'angles composé d'un support d'échelle et d'une échelle reliée à ce dernier et légèrement déplaçable en translation horizontale qui présente une graduation de mesure et caractérisé par le fait qu'il comporte, pour réduire le frottement, au moins un générateur de vibrations (O) qui est relié à l'échelle (T) et/ou au support d'échelle (M) et agit pendant l'exécution des mesures.

2. Dispositif de mesure de longueurs ou d'angles selon la revendication 1 caractérisé par le fait que le support d'échelle (M) est un profilé creux qui est muni d'une rainure (N) de direction longitudinale dans laquelle l'échelle (T), établie en forme de bande, est insérée libre et fixée à l'une (T1) de ses extrémités, tandis que le générateur de vibrations (O) attaque son autre extrémité (T2).

3. Dispositif de mesure de longueurs ou d'angles selon les revendications 1 et 2 caractérisé par le fait que le générateur de vibrations (O) est établi à la manière d'un oscillateur fonctionnant par magnétostriction ou de façon piézo-électrique, magnétique, acoustique ou analogue.

_Fig. 1_

_Fig. 2_